# NEW EUROPEAN PATENT SPECIFICATION

(11) **EP 3 147 099 B2**
(45) Date of publication and mention of the opposition decision: **29.07.2026**
(45) Mention of the grant of the patent: 26.07.2023
(21) Application number: 16190196.2
(22) Date of filing: 22.09.2016
(51) Int. Cl.: B29C 48/06, F21V 15/01

(54) **PROFILED BODY FOR LAMPS AND ITS METHOD OF MANUFACTURING**
PROFILIERTER KÖRPER FÜR LAMPEN UND SEIN HERSTELLUNGSVERFAHREN
CORPS PROFILÉ POUR LAMPES ET SON PROCÉDÉ DE FABRICATION

(30) Priority: 22.09.2015 IT UB20153802
(43) Date of publication of application: 29.03.2017
(73) Proprietor: GIPLAST srl, 21050 Lonate Ceppino VA (IT)
(72) Inventor: GHIDI, Enrico, I-21040 Gornate Olona VA (IT)
(74) Representative: Gislon, Gabriele

(56) References cited:
- EP-A1- 2 484 956
- EP-A2- 2 765 350
- US-A1- 2013 030 105
- US-A1- 2014 185 279
- UNKNOWN: "Custom-made Ceramic and Glass Components - Magnesia", 28 December 2014 (2014-12-28), XP055501971, Retrieved from the Internet <URL:https://web.archive.org/web/20141228195756/http://www.goodfellow-ceramics.com/products/ceramics/magnesia/> [retrieved on 20180824]
- UNKNOWN: "Show Navigation Show Navigation Show Navigation Show Navigation Magnesium Oxide | AMERICAN ELEMENTS � https", 8 September 2015 (2015-09-08), XP055502027, Retrieved from the Internet <URL:https://web.archive.org/web/20150908012333/https://www.americanelements.com/magnesium-oxide-1309-48-4> [retrieved on 20180824]
- ALFA AESAR ET AL: "Ceramics", 3 July 2015 (2015-07-03), XP055612040, Retrieved from the Internet <URL:https://web.archive.org/web/20150703170550/https://www.alfa.com/en/ceramics/> [retrieved on 20190809]
- Affidavit in lieu of an oath (written statement) by Mr. Florian Bisle concerning profiled bodies made available to the public by public prior use
- Technical drawing of an angular profiled body
- SAP order data concerning the angular profiled body
- Technical drawing of a tubular profiled body
- SAP order data concerning the tubular profiled body
- UTC Aerospace System – LED Wash Light Retrofi
- Lewis, Richard J., "Hawley's Condensed Chemical Dictionary, 12th edition," Van Nostrand Reinhold, 1993
- National Library of Medicine, "Titanium Dioxide", [cited 10.09.2024] Available from: [https://pubchem.ncbi.nlm.nih.gov/compound/Titanium-Dioxide
- Gázquez, Manuel et al., "A Review of the Production Cycle of Titanium Dioxide Pigment" Scientific Research, 2014
- page 1153 of Hawley's Condensed Chemical Dictionary, 12th edition
- Magnesium Oxide I AMERICAN ELEMENTS form Wayback Machine-Internet Archive
- “Polymer composites and blends for battery separators: State of the art, challenges and future trends”, J. Nunes-Pereira et al., 2015
- “Review: Fabrication of Engineering Ceramics by Injection Moulding. I. Materials Selection”, M. J. Edirisinghe and J. R. G. Evans, 1986
- “Effects of the Addition of Different Types of Fillers on the Properties of BaO-ZnO-B2O3-SiO2 Glass Composites for Application to Barrier Ribs of Plasma Display Panels”, S.-G. Kim et al., 2005

## Description

The present invention relates to the illumination field, and in particular the manufacturing of profiled bodies used for the manufacturing of lamps. More in detail, the present invention relates to the manufacturing of profiled bodies preferably made by extrusion of thermoplastic material.

It has to be immediately noted that the term "profiled body" is herein and in the following used to denote elongate bodies, preferably made by extrusion, to which the desired section shape is given. Profiled bodies are also known in the art by the term "section bar".

Profiled bodies for the manufacturing of lamps are shaped so as to comprise a housing seat (for example a hollow) for housing at least one light emitting device, such as for example light emitting diodes (LED).

US2014/0185279 discloses the production of a lamp housing by extrusion.

In the manufacturing of lamps by means of profiled bodies for example made of extruded thermoplastic materials, the heat flow and its outflow from the profiled body of the lamp is of particular importance.

Such problems worsen in sealed lamps (or sealed lamps) and in general in lamps having high level of protection against the intrusion of solids and/or liquids (which is conventionally measured by the IP grade).

In fact, a poor dispersion of heat therefore remaining trapped inside the profiled body of the lamp, can compromise the correct functionality of the electronic components arranged inside the profiled body, such as for example the LEDs or other light emitting devices, or other possible components needed for the operation thereof such as for example voltage regulators, etc.

The heat trapped inside the lamp reduces the life of the electronic components and their correct operation is impaired. Furthermore, even the same profiled body made of thermoplastic material is negatively affected by the heat trapped in its inside or however not effectively dissipated.

To compensate for this problem, dissipating elements made of aluminium or other metal material, placed in contact with the LEDs are used so as to take advantage from thermal conductivity of metal to make the heat flow outwards.

However, such a solution entails the increase of the number of components to be used for the manufacturing of the lamp, also depending on the IP protection degree to be achieved, the expected use and the lamp life expectancy.

Therefore, currently proposed solutions cause the undesired increase of the number of components, in addition to the undesired increase of their sizes and thus of the profiled bodies, as well as of the lamps made therewith.

It is therefore object of the present invention to solve the known art problems briefly discussed above. In particular, it is an object of the present invention to allow effective heat dissipation, in particular from the sealed lamps, without increasing the number of required components, as well as the their sizes.

Further object of the present invention is to provide a profiled body for rapidly and simply manufacturing lamps, and in particular sealed lamps (with high IP protection degree), by reducing the number of required components and their sizes, while allowing effective heat dissipation to be obtained.

These and other objects are achieved by a profiled body for the manufacturing of lamps, according to claim 1.

Further aspects/characteristics are disclosed in the dependent claims.

The present invention further relates to a lamp comprising a profiled body according to the invention.

The present invention further relates to a method for manufacturing the profiled body according to the invention.

Further characteristics, aspects and advantages of the present invention will be more evident from the following description, made by way of non-limiting example, referring to the accompanying figures, in which:
- figures 1a and 1b show respectively a sectional and partial perspective view of a possible embodiment of a profiled body for manufacturing the lamps according to the invention;
- figures 2a and 2b show respectively a sectional and partial perspective view of a further possible embodiment of a profiled body for manufacturing the lamps according to the invention.

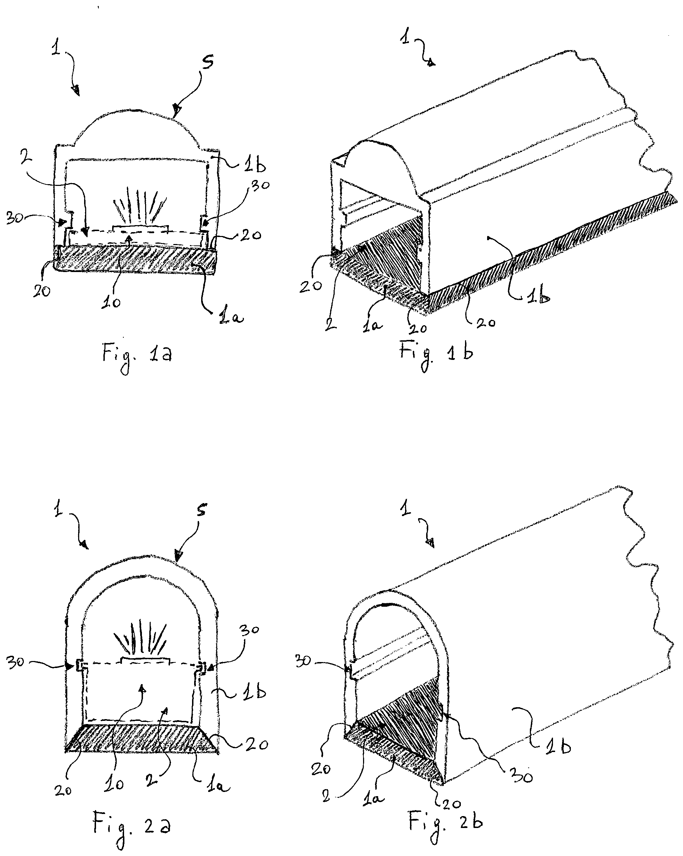

According to an aspect of the present invention, the profiled body 1 for manufacturing lamps comprises at least one housing seat 2 for housing at least one light emitting device 10 (only shown in figures 1a and 2a, for simplicity).

It has to be noted that by the term "housing seat" 2 at least one part of the profiled body is meant and shaped to receive a light emitting device 10, for example one or more LEDs for example arranged to form a strip, in addition to possible electrical components and/or supporting elements required for the operation thereof.

It has to be noted immediately that the profiled body 1 can comprise a closed section S (such as for example in the embodiments depicted in the figures), or an open section.

In case of closed section S, the housing seat 2 for housing the light emitting device 10 comprises a hollow 2 defined inside the closed section S.

It has to be further noted that the term profiled body is herein used to denote an elongate body, such as for example visible in the perspective partial views of figures 1b and 2b. The length of the profiled body 1 can vary depending on realization requirements. The profiled body 1 is provided at its own ends with covers or similar closing elements in known manner, not shown in the accompanying figures.

The profiled body 1 according to the invention comprises at least one portion 1b made of substantially transparent thermoplastic material to allow the light emission, i.e. the light, passing through it, and at least one portion 1a made of thermally conductive material.

Advantageously, the presence of at least one portion 1a of thermally conductive material allows effectively dissipating the heat generated for example by the light emitting device 10. In particular, according to a preferred embodiment wherein the profiled body has closed section S (such as for example disclosed in the accompanying figures), and the thermally conductive material 1a allows effectively preventing heat from being trapped inside the profiled body 1.

According to an aspect of the present invention, the thermally conductive material has thermal conductivity higher than the thermal conductivity of the substantially transparent thermoplastic material, preferably at least 3 times, more preferably at least 5 times, even more preferably at least 10 times higher than the thermal conductivity of the substantially transparent thermoplastic material.

Of course, the thermal conductivity of the thermally conductive material can be much higher than that of the transparent thermoplastic material, for example even several orders of magnitude higher.

This guarantees effective heat dissipation.

As regard the substantially transparent thermoplastic material, it has to be noted that the term "substantially transparent" is herein used to denote that it can be crossed by light (light emission). In other words, by the term transparent a not opaque material is meant, thus allowing the light passing through it.

It will be deemed substantially transparent also a translucent and/or colored material, according to installation requirements.

Transparent thermoplastic materials that can be used in the present invention are for example polycarbonate and polymethylmethacrylate (PMMA), however other thermoplastic materials such as for example polystyrene, nylon, polyethylene, polypropylene, PVC and PTFE should not be excluded.

In general, acrylic resins (such as PMMA), epoxy resins, polyester resins (such as polyethylene or polybutylene), polystyrene resins, polyamide resins (as nylon), etc. can be used.

Conversely, as regard the thermally conductive material it comprises at least one heat-conducting material, for example of carbon, or metal or mineral type, or a combination of one or more thereof.

The thermally conductive material comprises a thermoplastic base material and at least one filler of heat-conducting material.

In other words, a thermoplastic base material is filled in a known manner with a heat-conducting material. In general, the heat-conducting material is added to the thermoplastic base material to increase thermal conductivity properties of the added or filled conducting material generally combined with the thermoplastic base material. For example, the filler of heat-conducting material can be dispersed in known manner within the thermoplastic base material. The filler of heat-conducting material is selected from graphite, metal, carbon fiber, ceramic, or a combination of one or more thereof. As regard the thermoplastic base material having at least one filler of heat-conducting material, it can be selected from polycarbonate, nylon, polyvinyl chloride (PVC), polypropylene, etc.

Such a list is not limitative, in fact other thermoplastic materials able to be suitably filled with the heat-conducting material can be used as well.

For example, the above mentioned materials for the manufacturing of the transparent thermoplastic material portion can be used for making the thermally conductive material, and in particular as thermoplastic base materials in which the heat-conducting material can be added or filled.

The profiled body 1 according to the invention is made by an extrusion process. The substantially transparent thermoplastic material is co-extruded with the thermally conductive material. In other words, the substantially transparent thermoplastic material and the thermally conductive material are extruded simultaneously.

By doing so, the profiled body can be rapidly and simply manufactured and is provided with both at least one portion 1b allowing the light emission passing through it, and at least one thermally conductive portion 1b.

By doing so, the profiled body of the lamp can be manufactured by means of a single extrusion process.

Furthermore, according to an aspect of the present invention, the thermally conductive material 1a extends substantially for the whole length of the profiled body 1, thus allowing effective heat dissipation both in longitudinal and transverse directions.

It has to be noted that the shape of the section S of the profiled body can be conveniently selected based upon realization requirements. In particular, in the embodiment of figures 1a and 1b, the portion 1b of transparent thermoplastic material has in its upper part a curved portion made by a solid portion, on the contrary in the embodiment shown in figures 2a and 2b, the curved shape is made by determining a curved profile also in the inner hollow of the profiled body.

It has to be noted that the shape of the section S shown in figures 1a and 2a is not limitative, since different shapes of the section S can be envisaged. For example in case of closed section S, substantially circular, prismatic, polygonal shapes etc. can be provided. It should not be excluded as well the combination of portions of flat surface with portions of curved surface.

Also the arrangement of the portion 1a of thermally conductive material and the portion 1b of transparent thermoplastic material can change depending on realization and use requirements, for example based on the heat amount intended to be dissipated.

In particular, even if in the embodiments shown in figures, the portion 1a of conductive material forms the (preferably flat) lower surface of the profiled body, and the portion of transparent thermoplastic material is substantially C-shaped to form a closed section, such an arrangement can be modified.

For example, the portion 1a of conductive material can extend at least in part on the side part of the profiled body 1.

According to some possible embodiments, the portion 1a made of thermally conductive material constitutes at least 15%, preferably at least 20%, more preferably at least 25% of the volume and/or the section S of the profiled body 1.

However, embodiments are not excluded wherein the thermally conductive material constitutes a percentage lower or higher than the above reported values.

For example, by taking as a reference a closed section S provided with four sides, part of a side, or a whole side can be made of thermally conductive material, whereas the other three sides are made of transparent thermoplastic material. However, it should not be excluded that the thermally conductive material can extend as well on at least part of at least one additional side of the section S.

According to a possible embodiment, the portion 1a made of thermally conductive material is flat. In other words, according to a possible embodiment, the thermally conductive material has substantially flat shape and forms a flat surface of the profiled body, for example as visible in the accompanying figures.

Despite this, further embodiments are possible, not shown in the accompanying figures, for example wherein the portion 1a made of thermally conductive material is substantially circular or is shaped by a combination of flat and curved portions.

The light emitting device 10 can be advantageously arranged in contact (for example the interposition of a conducting paste can be provided) with the inner surface of the portion 1a of thermally conductive material so as to effectively dissipate heat.

The profiled body 1 comprises at least one interface 20 between the at least one portion 1b made of transparent thermoplastic material and at least one portion 1a made of thermally conductive material. Herein and in the following by "interface" the area and in particular the surface are intended in which the two materials, and in particular the transparent thermoplastic material and the thermally conductive material, are contacted.

According to different possible embodiments, the interface 20 has curved, or hyperbolic, or parabolic shape, or a combination of flat, or curved, or hyperbolic, or parabolic shape, if seen in the plane of the section S.

The interface 20 and thus the contact surface between the transparent thermoplastic material and the thermally conductive material can be arranged in any orientation in the section plane.

For example, the interface 20 can be made so as to be arranged diagonally, for example at an angle of the section S of the profiled body 1 (such as for example in the embodiment of figures 2a and 2b) or it can be arranged substantially parallel to the plane along which the thermally conductive material extends (for example as visible in figures 1a and 1b). The possibility that the interface 20 is normal to the plane along which the thermally conductive material extends is not excluded as well.

Furthermore, it has to be noted that the profiled body 1 according to the invention can comprise means 30 for restraining in position the light emitting device 10 for example consisting of a LED strip.

The restraining means 30 can be made in a single piece with the profiled body, for example during the extrusion process. According to a possible embodiment, the restraining means 30 comprise at least one protruding element extending from an inner surface of the profiled body with which the light emitting device 10 cooperates. For example, two protruding elements 30 can be provided (shaped for example as two protruding teeth substantially opposed one another), for example as visible in the embodiment of figures 1a and 1b. The light emitting device 10 can be advantageously arranged under such protruding elements 30 and thereby be restrained in position. According to a further possible embodiment, the restraining means 30 comprise at least one recess made on an inner surface of the profiled body with which the light emitting device 10 cooperates for the restraint (for example as visible in figures 2a, 2b). For example the light emitting device 10, for example the LED strip, can comprise a protruding portion intended to cooperate with the at least one recess, preferably the at least two recesses arranged substantially facing one another, for example as visible in figure 2a.

As already mentioned, despite having referred to these possible embodiments, the restraining means 30 to restrain the light emitting device 10 can take different shapes.

It has to be noted as well that according to a possible embodiment, the profiled body 1 can be not provided with restraining means 30 and the light emitting device is simply inserted into the housing seat 2, for example in the hollow 2 of the closed section S of the profiled body 1.

As already mentioned, the present invention also relates to a lamp comprising a profiled body 1 according to the invention. The lamp comprises a profiled body 1, at least one light emitting device 10, for example a LED strip, arranged at the housing seat 2. In case the profiled body has closed section S, the light emitting device is inserted into the inner housing hollow 2 defined by the closed section S. As mentioned, even if not shown in the accompanying figures, the ends of the profiled body 1 can be advantageously closed by means of convenient covers or like elements.

It has to be noted that the closed profile of the section S of the profiled body 1 according to the present invention allows advantageously to obtain a high degree of IP protection that can be used for manufacturing sealed lamps.

The present invention also relates to at least one method for manufacturing the profiled body 1 according to the invention. The method for manufacturing the profiled body 1 provides extruding the same, and co-extruding the transparent thermoplastic material and the thermally conductive material so as to form at least one transparent portion 1b for the light passing and at least one thermally conductive portion 1a of the profiled body 1 according to the present invention.

## Claims

1. Profiled body (1) for the manufacturing of lamps, comprising at least one seat (2) for housing at least one light emitting device (10), **characterized in that** said profiled body comprises at least one portion (1b) made of a substantially transparent thermoplastic material to allow the light emission passing through it and at least one portion (1a) made of a thermally conductive material, wherein said thermally conductive material comprises a thermoplastic base material and at least one filler of heat-conducting material and the filler of heat-conducting material is selected from graphite, metal, carbon fiber, ceramic, or a combination of one or more thereof, wherein said substantially transparent thermoplastic material is coextruded with said thermally conductive material, further comprising at least one interface (20) between the at least one portion (1b) made of transparent thermoplastic material and the at least one portion (1a) made of thermally conductive material, wherein said interface (20) has a curved, or hyperbolic, or parabolic shape, or a combination of flat, or curved, or hyperbolic, or parabolic shape, if seen in the plane of the section (S) of the profiled body.

2. Profiled body (1) according to claim 1, wherein said thermoplastic base material is selected from polycarbonate, nylon, polyvinyl chloride, polypropylene.

3. Profiled body (1) according to any one of the preceding claims, wherein said thermally conductive material has thermal conductivity higher than the thermal conductivity of the substantially transparent thermoplastic material, preferably at least 3 times, more preferably at least 5 times, even more preferably at least 10 times, higher than the thermal conductivity of the substantially transparent thermoplastic material.

4. Profiled body (1) according to any one of the preceding claims, **characterized by** comprising a closed section (S), or an open section.

5. Profiled body (1) according to any one of the preceding claims wherein said at least one portion (1a) made of thermally conductive material extends substantially throughout the whole length of the profiled body (1).

6. Profiled body (1) according to any one of the preceding claims, wherein the portion (1a) made of thermally conductive material constitutes at least 15%, preferably at least 20%, more preferably at least 25% of the volume and/or section (S) of the profiled body (1).

7. Profiled body (1) according to any one of the preceding claims, wherein at least one light emitting device (10) is arranged in contact with the inner surface of the portion (1a) of thermally conductive material.

8. Lamp comprising a profiled body (1) according to any one of the preceding claims and at least one light emitting device (10), preferably of LED type.

9. Method for the manufacturing of a profiled body (1) according to any one of the preceding claims, comprising the step of extruding said profiled body (1), comprising the step of co-extruding the transparent thermoplastic material and the thermally conductive material to form at least one transparent portion (1b) to allow the light passing through it and at least one thermally conductive portion (1a) of said profiled body (1).

## Patentansprüche

1. Profilkörper (1) zur Herstellung von Lampen, aufweisend mindestens einen Sitz (2) zur Aufnahme mindestens einer lichtemittierenden Vorrichtung (10), **dadurch gekennzeichnet, dass** der Profilkörper mindestens einen Abschnitt (1b) aus im Wesentlichen transparentem thermoplastischen Material aufweist, der es ermöglicht, dass durch ihn Licht durchtritt, und mindestens einen Abschnitt (1a) aus einem wärmeleitfähigen Material aufweist, wobei das wärmeleitfähige Material ein thermoplastisches Grundmaterial und mindestens einen Füllstoff aus wärmeleitfähigem Material umfasst, wobei der Füllstoff aus wärmeleitfähigen Material aus Graphit, Metall, Kohlefaser, Keramik oder einer Kombination aus einem oder mehreren davon ausgewählt ist, wobei das im Wesentlichen transparente thermoplastische Material mit dem wärmeleitfähigen Material coextrudiert ist, überdies aufweisend mindestens eine Schnittstelle (20) zwischen dem mindestens einen Abschnitt (1b) aus transparentem thermoplastischem Material und dem mindestens einen Abschnitt (1a) aus wärmeleitfähigen Material, wobei die Schnittstelle (20) eine gekrümmte oder hyperbolische oder parabolische Form oder eine Kombination von flacher oder gekrümmter oder hyperbolischer oder parabolischer Form aufweist, falls betrachtet in der Ebene der Sektion (S) des Profilkörpers.

2. Profilkörper (1) nach Anspruch 1, wobei das thermoplastische Grundmaterial aus Polycarbonat, Nylon, Polyvinylchlorid, Polypropylen ausgewählt ist.

3. Profilkörper (1) nach einem der vorhergehenden Ansprüche, wobei das wärmeleitfähige Material eine höhere Wärmeleitfähigkeit aufweist als die Wärmeleitfähigkeit des im Wesentlichen transparenten thermoplastischen Materials, vorzugsweise mindestens dreimal, bevorzugter mindestens fünfmal, noch bevorzugter mindestens zehnmal höher als die Wärmeleitfähigkeit des im Wesentlichen transparenten thermoplastischen Materials.

4. Profilkörper (1) nach einem der vorhergehenden Ansprüche, **dadurch gekennzeichnet, dass** er eine geschlossene Sektion (S) oder eine offene Sektion aufweist.

5. Profilkörper (1) nach einem der vorhergehenden Ansprüche, wobei sich der mindestens eine Abschnitt (1a) aus wärmeleitfähigem Material im Wesentlichen über die gesamte Länge des Profilkörpers (1) erstreckt.

6. Profilkörper (1) nach einem der vorhergehenden Ansprüche, wobei der Abschnitt (1a) aus wärmeleitfähigem Material mindestens 15 %, vorzugsweise mindestens 20 %, besonders bevorzugt mindestens 25 % des Volumens und/oder der Sektion (S) des Profilkörpers (1) ausmacht.

7. Profilkörper (1) nach einem der vorhergehenden Ansprüche, wobei mindestens eine lichtemittierende Vorrichtung (10) in Kontakt mit der Innenfläche des Abschnitts (1a) aus wärmeleitfähigem Material angeordnet ist.

8. Lampe, umfassend einen Profilkörper (1) nach einem der vorhergehenden Ansprüche und mindestens eine lichtemittierende Vorrichtung (10), vorzugsweise vom LED-Typ.

9. Verfahren zur Herstellung eines Profilkörpers (1) nach einem der vorhergehenden Ansprüche, umfassend den Schritt des Extrudierens des Profilkörpers (1), umfassend den Schritt des Coextrudierens des transparenten thermoplastischen Materials und des wärmeleitfähigen Materials, um mindestens einen transparenten Abschnitt (1b), der es ermöglicht, dass durch ihn Licht durchtritt, und mindestens einen wärmeleitfähigen Abschnitt (1a) des Profilkörpers (1) zu bilden.

## Revendications

1. Corps profilé (1) pour la fabrication de lampes, comprenant au moins un siège (2) pour loger au moins un dispositif émetteur de lumière (10), **caractérisé en ce que** ledit corps profilé comprend au moins une partie (1b) faite d'un matériau thermoplastique substantiellement transparent pour permettre à l'émission de lumière de passer à travers lui et au moins une partie (1a) faite d'un matériau thermoconducteur, dans lequel ledit matériau thermoconducteur comprend un matériau de base thermoplastique et au moins une charge de matériau conducteur de chaleur et la charge de matériau conducteur de chaleur est choisie parmi le graphite, le métal, la fibre de carbone, la céramique ou une combinaison d'un ou de plusieurs de ces éléments, dans lequel ledit matériau thermoplastique substantiellement transparent est coextrudé avec ledit matériau thermoconducteur, comprenant en outre au moins une interface (20) entre ladite au moins une partie (1b) faite d'un matériau thermoplastique transparent et ladite au moins une partie (1a) faite d'un matériau thermoconducteur, dans lequel ladite interface (20) a une forme incurvée, hyperbolique ou parabolique, ou une combinaison de formes plates, ou incurvées, ou hyperboliques ou paraboliques, lorsqu'elle est vue dans le plan de la section (S) du corps profilé.

2. Corps profilé (1) selon la revendication 1, dans lequel le matériau de base thermoplastique est choisi parmi le polycarbonate, le nylon, le chlorure de polyvinyle et le polypropylène.

3. Corps profilé (1) selon l'une quelconque des revendications précédentes, dans lequel ledit matériau thermoconducteur a une conductivité thermique supérieure à la conductivité thermique du matériau thermoplastique sensiblement transparent, de préférence au moins trois fois, de préférence encore au moins cinq fois, plus préférablement encore au moins dix fois, supérieure à la conductivité thermique du matériau thermoplastique sensiblement transparent.

4. Corps profilé (1) selon l'une quelconque des revendications précédentes, **caractérisé par** la présence d'une section fermée (S), ou d'une section ouverte.

5. Corps profilé (1) selon l'une quelconque des revendications précédentes, dans lequel ladite au moins une partie (1a) faite d'un matériau thermoconducteur s'étend sensiblement sur toute la longueur du corps profilé (1).

6. Corps profilé (1) selon l'une quelconque des revendications précédentes, dans lequel la partie (1a) faite d'un matériau thermoconducteur constitue au moins 15 %, de préférence au moins 20 %, plus préférentiellement au moins 25 % du volume et/ou de la section (S) du corps profilé (1).

7. Corps profilé (1) selon l'une quelconque des revendications précédentes, dans lequel au moins un dispositif émetteur de lumière (10) est disposé en contact avec la surface intérieure de la partie (1a) de matériau thermoconducteur.

8. Lampe comprenant un corps profilé (1) selon l'une quelconque des revendications précédentes et au moins un dispositif émetteur de lumière (10), de préférence de type LED.

9. Procédé de fabrication d'un corps profilé (1) selon l'une quelconque des revendications précédentes, comprenant l'étape consistant à extruder ledit corps profilé (1), comprenant l'étape consistant à coextruder le matériau thermoplastique transparent et le matériau thermoconducteur pour former au moins une partie transparente (1b) pour laisser passer la lumière et au moins une partie thermoconductrice (1a) dudit corps profilé (1).
